# EUROPÄISCHE PATENTANMELDUNG

(11) **EP 2 264 093 A1**
(43) Veröffentlichungstag der Anmeldung: **22.12.2010**
(21) Anmeldenummer: 09162767.9
(22) Anmeldetag: 16.06.2009
(51) Int. Cl.: C08K 5/00, C08K 5/5357, C08L 77/00

(54) **Flammgeschützte Polyamidformmassen**

(71) Anmelder: THOR GmbH, 67346 Speyer (DE)
(72) Erfinder: Butz, Volker Dr., 67434 Neustadt/Weinstrasse (DE)
(74) Vertreter: Jacobi, Markus Alexander

(57) **Zusammenfassung**

Die Erfindung betrifft thermoplastische Polyamidformmassen enthaltend
(A) 10 bis 99 Gew.-% mindestens eines thermoplastischen Polyamids,
(B) 1 bis 40 Gew.-% eines Flammschutzmittels enthaltend ein oder mehrere Phosphonatverbindung(en) der Formel 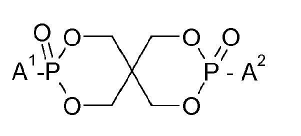 wobei A¹ und A² unabhängig voneinander eine substituierte oder nicht substituierte geradkettige oder verzweigte Alkylgruppe mit 1 bis 4 Kohlenstoffatomen, substituiertes oder nicht substituiertes Benzyl, substituiertes oder nicht substituiertes Phenyl, substituiertes oder nicht substituiertes Naphthyl darstellen, und
(C) 0 bis 70 Gew.-% weiterer Zusatzstoffe.

Die Erfindung betrifft ferner Verfahren zur Herstellung derartiger thermoplastischer Polyamidformmassen, sowie die Verwendung der Formmassen zur Herstellung von Fasern, Folien und Formkörpern jeglicher Art.

## Beschreibung

Die Erfindung betrifft thermoplastische Polyamidformmassen mit sehr guten flammhemmenden Eigenschaften, Verfahren zur Herstellung derartiger thermoplastischer Polyamidformmassen sowie die Verwendung der Formmassen zur Herstellung von Fasern, Folien und Formkörpern jeglicher Art.

Thermoplastische Polyamide finden in vielen Bereichen der Technik und des täglichen Bedarfs eine vielfältige Anwendung. Dies beruht im Wesentlichen auf dem guten Verarbeitungsverhalten und der Möglichkeit, diese thermoplastischen Polymere anwendungsgerecht maßzuschneidern.

Ein wesentlicher Teil der hergestellten Polyamide entfällt derzeit auf die Standardtypen PA6 (Poly-ε-caprolactam) und PA66 (Polyhexamethylenadipinamid). Ein kleinerer Anteil entfällt auf PA11 (Polyundecanamid), PA12 (Poly-ε-laurinlactam), PA610 (Polyhexamethylensebacinamid) und PA612 (Polyhexamethylendodecanamid) sowie CoPolyamide. In etwa 80 % der weltweiten Polyamidproduktion werden zu Fasern und Geweben verarbeitet; etwa knapp 20 % gehen in technische Anwendungsgebiete, insbesondere in den Automobilbau, die Elektroindustrie, den Verpackungssektor und den Maschinen- und Apparatebau.

Polyamide sind entsprechend einigen Prüfverfahren zwar selbstverlöschend, sie verlieren jedoch diese Eigenschaft schon nach dem Zusatz von Füllstoffen wie Glasfasern oder Pigmenten. Für zahlreiche weitere Anwendungen beispielsweise in der Elektrotechnik und dem Automobilbau wird jedoch zusätzlich flammgeschütztes Polyamid benötigt. Der Flammschutz soll dabei im Brandfall ausreichend Zeit bieten, um Menschen und Sachwerte zu retten.

Als Flammschutzmittel werden beispielsweise organische Halogenverbindungen und roter Phosphor eingesetzt. Die Halogenverbindungen sind vorwiegend chlorierte oder bromierte Kohlenwasserstoffe, die häufig in Verbindung mit Zinkverbindungen oder dem zwar synergistisch wirksamen, jedoch als kanzerogen eingestuften Antimontrioxid kombiniert werden. Die Halogenverbindungen haben den Nachteil, im Brandfall hochkorrosive und hochgiftige Zersetzungsprodukte, wie Chlorwasserstoff und Bromwasserstoff freizusetzen und eine starke Rauchbildung zu verursachen.

Roter Phosphor kommt meistens in gekapselter Form zum Einsatz. Trotz der Kapselung besteht bei den hohen Verarbeitungstemperaturen jedoch die Gefahr von Phosphorbränden. Infolge einer Disproportionierung zu Phosphin und Phosphaten kann es dabei zu Explosionen und zu einem erhöhten Verschleiß der Verarbeitungsmaschinen kommen. Nachteilig ist zudem das schlechte Elektrokorrosionsverhalten von mit rotem Phosphor flammwidrig ausgerüsteten Polyamiden sowie deren Verfärbung.

Um die mit Halogenverbindungen und rotem Phosphor verbundenen Nachteile zu minimieren, ist man seit einigen Jahren bemüht, flammgeschützte Polyamide ohne derartige Flammschutzmittel zu entwickeln. Dazu wird beispielsweise der Einsatz von Stickstoffverbindungen wie Cyanoguanidin (DE 39 09 145 A1), Melamin und Melaminsalzen (DE 36 09 341 A1 und DE 41 41 861 A1) vorgeschlagen.

Ferner wurde bereits vorgeschlagen, die Polyamidsynthese in Gegenwart von Verbindungen durchzuführen, die bei der Polymerisation in die Polyamidkette eingebaut werden. So wurde beispielsweise für die Polymerisation von ε-Caprolactam der Einsatz von n-Phosphonaten und n-Phosphaten des ε-Caprolactams empfohlen (siehe dazu Journal of Applied Polymer Science, Vol. 47 (1993), Seiten 1185 bis 1192).

Aufgabe der Erfindung war es daher, halogenfreie, leicht verarbeitbare thermoplastische Polyamidformmassen bereitzustellen, die einen effektiven Flammschutz aufweisen.

Gelöst wird diese Aufgabe durch thermoplastische Polyamidformmassen enthaltend
(A) 10 bis 99 Gew.-% mindestens eines thermoplastischen Polyamids,
(B) 1 bis 40 Gew.-% eines Flammschutzmittels enthaltend ein oder mehrere Phosphonatverbindung(en) der Formel 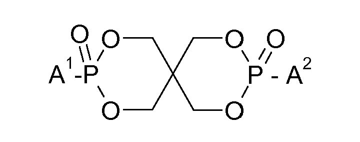 wobei A¹ und A² unabhängig voneinander eine substituierte oder nicht substituierte geradkettige oder verzweigte Alkylgruppe mit 1 bis 4 Kohlenstoffatomen, substituiertes oder nicht substituiertes Benzyl, substituiertes oder nicht substituiertes Phenyl, substituiertes oder nicht substituiertes Naphthyl darstellen, und
(C) 0 bis 70 Gew.-% weiterer Zusatzstoffe,
wobei die Summe der Gewichtsprozente der Komponenten (A) bis (C) 100 ergibt.

Vorteilhafterweise hat sich im Rahmen der Erfindung herausgestellt, das die Phosphonatverbindung(en) (B) in das thermoplastische Polyamid (A) sehr gut einarbeiten lassen, wodurch sowohl flammgeschützte Spritzgussformteile als auch dünne Folien und feine Fasern hergestellt werden können. Die erfindungsgemäße Flammschutzkomponente (die Phosphonatverbindung(en) (B)) liegen bei der üblichen, nachfolgend definierten Einarbeitungstemperatur bevorzugt in geschmolzener Form vor und lasen sich homogen in das thermoplastische Polyamid (A) einarbeiten.

Außerdem betrifft die vorliegende Erfindung die Verwendung derartiger thermoplastischer Polyamidformmassen zur Herstellung von Formkörpern, Fasern und Folien sowie die hierbei erhältlichen Formkörper jeglicher Art.

Gemäß einer bevorzugten Ausführungsform betrifft die Erfindung Fasern mit einem Gehalt an Komponente (B) im Bereich von 2 bis 10 Gew.-%, bevorzugt im Bereich von 4 bis 8 Gew.-%, besonders bevorzugt im Bereich von 6 bis 7 Gew.-%, bezogen auf das Gesamtgewicht der Faser. Insbesondere Polyamidfasern mit einer Dicke im Bereich von 5 bis 45 µm bevorzugt mit einer Dicke von 10 bis 20 µm.

Als Komponente (A) enthalten die erfindungsgemäßen thermoplastischen Polyamidformmassen 10 bis 99 Gew.-%, vorzugsweise 20 bis 95 Gew.-% und insbesondere 30 bis 85 Gew.-% mindestens eines Polyamids.

Die Polyamide der erfindungsgemäßen Formmassen weisen im Allgemeinen eine Viskositätszahl von 70 bis 350, vorzugsweise 70 bis 170 ml/g auf, bestimmt in einer 0,5 gew.-%igen Lösung in 96 gew.-%iger Schwefelsäure bei 25 °C gemäß ISO307.

Halbkristalline oder amorphe Harze mit einem Molekulargewicht (Gewichtsmittelwert) von mindestens 5000, wie sie zum Beispiel in den amerikanischen Patentschriften US 2,071,250, US 2,071,251, US 2,130,523, US 2,130,948, US 2,241,322, US 2,312,966, US 2,512,606 und US 3,393,210 beschrieben, sind bevorzugt.

Beispiele dafür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien beispielhaft Adipinsäure, Azelainsäure, Sebacinsäure, Dodecandisäure und Terephthal- und/oder Isoterephthalsäure als Säuren genannt.

Als Diamine eignen sich besonders Alkyldiamine mit 6 bis 12, insbesondere 6 bis 8 Kohlenstoffatomen sowie n-Xylylendiamin, Di-(4-aminophenyl)methan, Di-(4-aminocyclohexal)-methan, 2,2-Di-(4-aminophenyl)-propan, 2,2-Di-(4-aminocyclohexyl)-propan oder 1,5-Diamino-2-methyl-pentan.

Bevorzugte Polyamide sind Polyhexamethylenadipinsäureamid, Polyhexamethylensebacinsäureamid und Polycaprolactam sowie Copolyamide 6/66, insbesondere mit einem Anteil von 5 bis 95 Gew.-% an Caprolactam-Einheiten.

Weiterhin geeignete Polyamide sind erhältlich aus ω-Aminoalkylnitrilen wie beispielsweise Aminocapronitril (PA6) und Adipinonitril mit Hexamethylendiamin (PA66) durch sogenannte Direktpolymerisation in Anwesenheit von Wasser, wie beispielsweise in der DE 10 31 3681 A1, EP 1 198 491 A1 und EP 0 922 065 A1 beschrieben.

Außerdem seien auch noch Polyamide erwähnt, die zum Beispiel durch Kondensation von 1,4-Diaminobutan mit Adipinsäure unter erhöhter Temperatur erhältlich sind (Polyamid 4,6). Herstellungsverfahren dieser Verbindungen sind zum Beispiel in der EP 0 038 094 A1, EP 0 038 582 A1 und EP 0 039 524 A1 beschrieben.

Weiterhin sind Polyamide, die durch Copolymerisation zweier oder mehrerer der vorangegangenen Monomeren erhältlich sind, oder Mischungen mehrerer Polyamide geeignet, wobei das Mischungsverhältnis beliebig ist.

Weiterhin haben sich teilaromatische Copolyamide wie PA 6/6T und PA 66/6T als besonders vorteilhaft erwiesen, deren Triamingehalt weniger als 0,5, bevorzugt weniger als 0,3 Gew.-% beträgt (siehe EP 0 299 444 A1). Die Herstellung der bevorzugten teilaromatischen Polyamide mit niedrigem Triamingehalt kann nach dem in den EP 0 129 194 A1 und EP 0 129 191 A1 beschriebenen Verfahren erfolgen.

Die nachfolgende, nicht abschließende Aufstellung erhält die genannten sowie weitere Polyamide (A) im Sinne der Erfindung und die enthaltenen Monomeren:
PA4 Pyrolidon; PA6 ω-Caprolactam; PA7 Ethanollactam; PA8 Capryllactam;
PA9 9-Aminopelagonsäure; PA11 11-Aminoundecansäure; PA12 Laurinlactam;

PA46 Tetramethylendiamin, Adipinsäure; PA66 Hexamethylendiamin, Adipinsäure; PA69 Hexamethylendiamin, Azelainsäure; PA610 Hexamethylendiamin, Sebacinsäure; PA612 Hexamethylendiamin, Decandicarbonsäure; PA613 Hexamethylendiamin, Undecandicarbonsäure; PA1212 1,12-Dodecandiamin, Decandicarbonsäure; PA1313 1,13-Diaminotridecan, Undecandicarbonsäure; PA6T Hexamethylendiamin, Terephthalsäure; PA9T Nonyldiamin/Terephthalsäure; PAMXD6 n-Xylylendiamin, Adipinsäure; PA6I Hexamethylendiamin, Isophthalsäure; PA6-3-T Trimethylhexamethylendiamin, Terephthalsäure; PA6/6T (siehe PA6 und PA6T); PA6/66 (siehe PA6 und 66); PA6/12 (siehe PA6 und PA12), PA66/6/610 (siehe PA66, PA6 und PA610); PA6I/6T (siehe PA6I und PA6T); PAPACM12 Diaminodicyclohexylmethan, Laurinlactam; PA6I/6T/PACM wie PA6I/6T + Diaminodicyclohexylmethan; PA12/MACMI Laurinlactam, Dimethyldiaminodicyclohexylmethan, Isophthalsäure; PA12/MACMT Laurinlactam, Dimethyldiaminodicyclohexylmethan, Terephthalsäure und PAPDA-T Phenylendiamin, Terephthalsäure.

Die erfindungsgemäßen thermoplastischen Polyamidformmassen enthalten als Komponente (B) erfindungsgemäß 1 bis 40, vorzugsweise 2 bis 20 und insbesondere 4 bis 10 Gew.-% eines Flammschutzmittels enthaltend

(B) ein oder mehrere Phosphonatverbindungen(en) der Formel 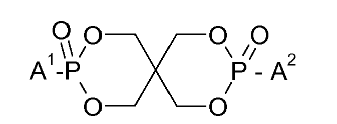 wobei A¹ und A² unabhängig voneinander eine substituierte oder nicht substituierte geradkettige oder verzweigte Alkylgruppe mit 1 bis 4 Kohlenstoffatomen, substituiertes oder nicht substituiertes Benzyl, substituiertes oder nicht substituiertes Phenyl, substituiertes oder nicht substituiertes Naphthyl darstellen.

"Alkylgruppe" bedeutet eine gesättigte aliphatische Kohlenwasserstoffgruppe, die geradkettig oder verzweigt sein kann und von 1 bis 4 Kohlenstoffatome in der Kette haben kann. Bei Alkyl handelt es sich bevorzugt um Methyl, Ethyl, 1-Propyl, 2-Propyl, 1-Butyl, 2-Butyl, 2-Methyl-1-propyl (Isobutyl) und 2-Methyl-2-propyl (tert.-Butyl).

"Substituiert" bedeutet, dass die Alkylgruppe mit einem oder mehreren Substituenten ausgewählt aus Alkyl, gegebenenfalls substituiertem Aryl, gegebenenfalls substituiertem Aralkyl, Alkoxy, Nitro, Carboalkoxy, Cyano, Halo, Alkylmercaptyl, Trihaloalkyl oder Carboxyalkyl substituiert ist.

"Halogen" (oder "halo") bedeutet Chlor (chloro), Fluor (fluoro), Brom (bromo) oder Iod (iodo).

Gemäß einer bevorzugten Ausführungsform enthalten die erfindungsgemäßen thermoplastischen Polyamidformmassen als Phosphonatverbindung (B) eine Verbindung der nachfolgenden Formel

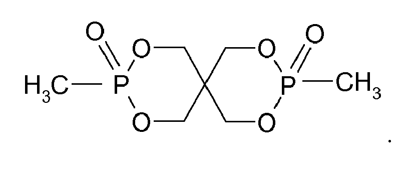

Diese Verbindung, bekannt unter den Bezeichnungen 2,4,8,10-Tetraoxa-3,9-diphosphaspiro [5.5] undecan-3,9-dimethyl-3,9dioxid, 3,9-Dimethyl-2,4,8,10-tetraoxa-3,9-diphosphaspiro [5.5]undecan-3,9-dioxid mit der CAS Nummer 3001-98-7 ist erhältlich unter bei der THOR GmbH, Speyer, Deutschland dem Markennamen AFLAMMIT ™ TL1260.

Gemäß einer bevorzugten Ausführungsform enthalten die erfindungsgemäßen thermoplastischen Polyamidformmassen die Komponente(n) (B) als alleinige(s) Flammschutzmittel. Gemäß einer weiteren bevorzugten Ausführungsform der Erfindung enthalten die erfindungsgemäßen thermoplastischen Polyamidformmassen die Verbindung der nachfolgenden Formel 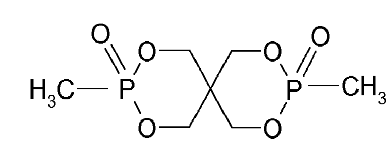 als alleiniges Flammschutzmittel.

Als Komponenten (C) können die erfindungsgemäßen Formmassen allgemein 0 bis 70, vorzugsweise bis zu 50 Gew.-% weiterer Zusatzstoffe enthalten.

Als Komponente (C) können die erfindungsgemäßen Formmassen 0 bis 3, bevorzugt 0,05 bis 3, vorzugsweise 0,1 bis 1,5 und insbesondere 0,1 bis 1 Gew.-% eines Schmiermittels enthalten.

Bevorzugt sind Al-, Alkali-, Erdalkalisalze oder Ester- oder Amide von Fettsäuren mit 10 bis 44 C-Atomen, vorzugsweise mit 14 bis 44 C-Atomen.

Die Metallionen sind vorzugsweise Erdalkali und Al, wobei Ca oder Mg besonders bevorzugt sind.

Bevorzugte Metallsalze sind Ca-Stearat und Ca-Montanat sowie Al-Stearat.

Es können auch Mischungen verschiedener Salze eingesetzt werden, wobei das Mischungsverhältnis beliebig ist.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-aminohexyl)amin, wobei Ethylendiamin und Hexamethylendiamin besonders bevorzugt sind. Bevorzugte Ester oder Amide sind entsprechend Glycerindistearat, Glycer-intristearat, Ethylendiamindistearat, Glycerinmonopalmitrat, Glycerintrilaurat, Glycerinmonobehenat und Pentaerythtetrastearat.

Es können auch Mischungen verschiedener Ester oder Amide oder Ester mit Amiden in Kombination eingesetzt werden, wobei das Mischungsverhältnis beliebig ist.

Als weitere Komponenten (C) können die erfindungsgemäßen Formmassen Wärmestabilisatoren oder Antioxidantien oder deren Mischungen, ausgewählt aus der Gruppe der Kupferverbindungen, sterisch gehinderter Phenole, sterisch gehinderter aliphatischer Amine und/oder aromatischer Amine, enthalten.

Kupferverbindungen sind in den erfindungsgemäßen PA-Formmassen zu 0,05 bis 3, vorzugsweise 0,1 bis 1,5 und insbesondere 0,1 bis 1 Gew.-% enthalten, vorzugsweise als Cu-(I)-Halogenid, insbesondere in Mischung mit einem Alkalihalogenid, vorzugsweise KI, insbesondere im Verhältnis 1:4, oder eines sterisch gehinderten Phenols oder eines Aminstabilisators oder deren Mischungen enthalten.

Als Salze des einwertigen Kupfers kommen vorzugsweise Kupfer(I)-Acetat, Kupfer(I)-Chlorid, -Bromid und -Iodid in Frage. Sie sind in Mengen von 5 bis 500 ppm Kupfer, vorzugsweise 10 bis 250 ppm, bezogen auf Polyamid, enthalten.

Die vorteilhaften Eigenschaften werden insbesondere erhalten, wenn das Kupfer in molekularer Verteilung im Polyamid vorliegt. Dies wird erreicht, wenn man der Formmasse ein Konzentrat zusetzt, das Polyamid, ein Salz des einwertigen Kupfers und ein Alkalihalogenid in Form einer festen, homogenen Lösung enthält. Ein typisches. Konzentrat besteht z.B. aus 79 bis 95 Gew.-% Polyamid und 21 bis 5 Gew.-% eines Gemisches aus Kupferiodid oder -bromid und Kaliumiodid. Die Konzentration der festen homogenen Lösung an Kupfer liegt bevorzugt zwischen 0,3 und 3, insbesondere zwischen 0,5 und 2 Gew.-%, bezogen auf das Gesamtgewicht der Lösung und das molare Verhältnis von Kupfer(I)-Iodid zu Kaliumjodid liegt zwischen 1 und 11,5, vorzugsweise zwischen 1 und 5.

Geeignete Polyamide für das Konzentrat sind Homopolyamide und Copolyamide, insbesondere Polyamid 6 und Polyamid 6.6.

Als sterisch gehinderte Phenole eignen sich prinzipiell alle Verbindungen mit phenolischer Struktur, die am phenolischen Ring mindestens eine sterisch raumfüllende Gruppe aufweisen.

Vorzugsweise kommen z. B. Verbindungen der Formel 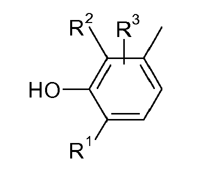 in Betracht, in der bedeuten:
R¹ und R² eine Alkylgruppe, eine substituierte Alkylgruppe oder eine substituierte Triazolgruppe, wobei die Reste R¹ und R² gleich oder verschieden sein können und R³ eine Alkylgruppe, eine substituierte Alkylgruppe, eine Alkoxygruppe oder eine substituierte Aminogruppe darstellt.

Antioxidantien der genannten Art werden beispielsweise in der DE-A 27 02 661 (US-A 4 360 617) beschrieben.

Eine weitere Gruppe bevorzugter sterisch gehinderter Phenole leiten sich von substituierten Benzolcarbonsäuren ab, insbesondere von substituierten Benzolpropionsäuren.

Besonders bevorzugte Verbindungen aus dieser Klasse sind Verbindungen der Formel 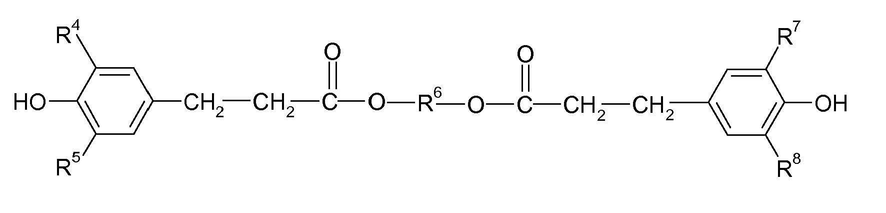 wobei R⁴, R⁵, R⁷ und R⁸ unabhängig voneinander C₁-C₈-Alkylgruppen darstellen, die ihrerseits substituiert sein können (mindestens eine davon ist eine sterisch anspruchsvolle Gruppe) und R⁶ einen zweiwertigen aliphatischen Rest mit 1 bis 10 C-Atomen bedeutet, der in der Hauptkette auch C-O-Bindungen aufweisen kann

Bevorzugte Verbindungen, die dieser Formel entsprechen, sind

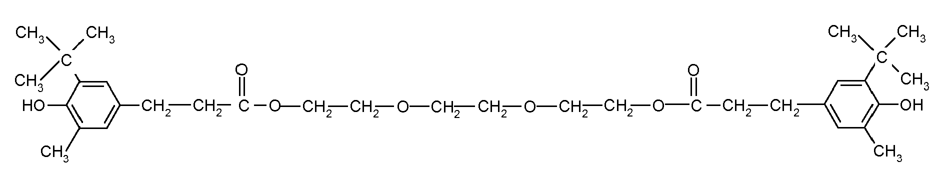

### (Irganox^{®} 245 der Firma Ciba-Geigy)

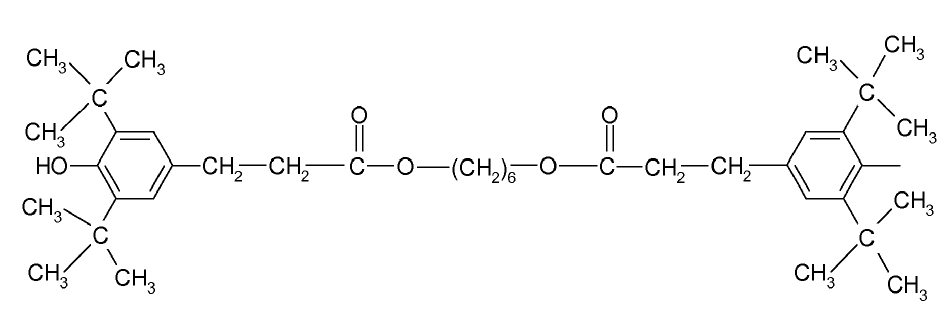

### (Irganox® 259 der Firma Ciba-Geigy)

Beispielhaft genannt seien insgesamt als sterisch gehinderte Phenole: 2,2'-Methylen-bis-(4-methyl-6-tert.-butylphenol), 1,6-Hexandiol-bis[3-(3,5-di-tert.-butyl-4-hydroxyphenyl)-propionat], Pentaerythril-tetrakis-[3-(3,5-di-tert.-butyl-4-hydroxyphenyl)-propionat], Distearyl-3,5-di-tert.-butyl-4-hydroxybenzylphosphonat, 2,6,7-Trioxa-1-phosphabicyclo-[2.2.2]oct-4-yl-methyl-3,5-di-tert.-butyl-4-hydroxyhydrocinnamat, 3,5-Di-tert-butyl-4-hydroxyphenyl-3,5-distearyl-thiotriazylamin, 2-(2'-Hydroxy-3'-hydroxy-3',5'-di-tert.-butylphenyi)-5-chlorbenzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyl-dimethylamin.

Als besonders wirksam erwiesen haben sich und daher vorzugsweise verwendet werden 2,2'-Methylen-bis-(4-methyl-6-tert.-butylphenyl), 1,6-Hexandiol-bis-(3,5-di-tert.-butyl-4-hydroxyphenyl]-propionat (Irganox® 259), Pentaerythrityl-tetrakis-[3-(3,5-di-tert.-butyl-4-hydroxyphenyl)-propionat] sowie N,N'-Hexamethy-len-bis-3,5-di-tert.-butyl-4-hydroxy-hydrocinnamid (Irganox® 1098) und das vorstehend beschriebene Irganox^{®} 245 der Firma Ciba Geigy, das besonders gut geeignet ist.

Die phenolischen Antioxidantien, die einzeln oder als Gemische eingesetzt werden können, sind in einer Menge von 0,05 bis zu 3 Gew.-%, vorzugsweise von 0,1 bis 1,5 Gew.-%, insbesondere 0,1 bis 1 Gew.-%, bezogen auf das Gesamtgewicht der Formmassen (A) bis (C) enthalten.

In manchen Fällen haben sich sterisch gehinderte Phenole mit nicht mehr als einer sterisch gehinderten Gruppe in ortho-Stellung zur phenolischen Hydroxygruppe als besonders vorteilhaft erwiesen; insbesondere bei der Beurteilung der Farbstabilität bei Lagerung in diffusem Licht über längere Zeiträume.

Als faser- oder teilchenförmige Füllstoffe (C) seien Kohlenstofffasern, Glasfasern, Glaskugeln, amorphe Kieselsäure, Calciumsilicat, Calciummetasilicat, Magnesiumcarbonat, Kaolin, Kreide, gepulverter Quarz, Glimmer, Bariumsulfat und Feldspat genannt, die in Mengen bis zu 40 Gew.-%, insbesondere 1 bis 15 Gew.-%, bezogen auf die Summe der Gewichtsprozente der Komponenten (A) bis (C), die 100 ergibt, eingesetzt werden können.

Als bevorzugte faserförmige Füllstoffe seien Kohlenstofffasern, Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Die faserförmigen Füllstoffe können zur besseren Verträglichkeit mit dem Thermoplasten mit einer Silanverbindung oberflächlich vorbehandelt sein.

Geeignete Silanverbindungen sind solche der allgemeinen Formel

(X-(CH₂)ₙ)ₖ-Si(O-CₘH₂ₘ₊₁)₄₋ₖ

in der die Substituenten folgende Bedeutung haben: 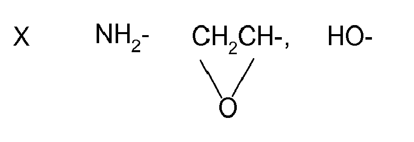 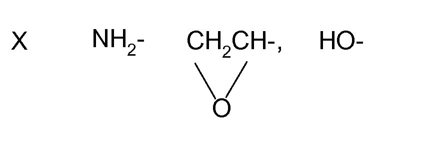
- n: eine ganze Zahl von 2 bis 10, bevorzugt 3 und 4,
- m: eine ganze Zahl von 1 bis 5, bevorzugt 1 und 2,
- k: eine ganze Zahl von 1 bis 3, bevorzugt 1.

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im Allgemeinen in Mengen von 0,01 bis 2, vorzugsweise 0,025 bis 1,0 und insbesondere 0,05 bis 0,5 Gew.-% (bezogen auf die faserförmigen Füllstoffe) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8:1 bis 35:1, bevorzugt von 8:1 bis 11:1 auf. Der mineralische Füllstoff kann gegebenenfalls mit den vorstehend genannten Silanverbindungen vorbehandelt sein; die Vorbehandlung ist jedoch nicht unbedingt erforderlich.

Als weitere Füllstoffe seien Kaolin, calciniertes Kaolin, Wollastonit, Talkum und Kreide genannt sowie zusätzlich plättchen- oder nadelförmige Nanofüllstoffe, bevorzugt in Mengen zwischen 0,1 und 10%. Bevorzugt werden hierfür Böhmit, Bentonit, Montmorillonit, Vermicullit, Hektorit und Laponit eingesetzt. Um eine gute Verträglichkeit der plättchenförmigen Nanofüllstoffe mit dem organischen Bindemittel zu erhalten, werden die plättchenförmigen Nanofüllstoffe nach dem Stand der Technik organisch modifiziert. Der Zusatz der plättchen- oder nadelförmigen Nanofüllstoffe zu den erfindungsgemäßen Nanokompositen führt zu einer weiteren Steigerung der mechanischen Festigkeit.

Insbesondere wird Talkum verwendet, welches ein hydratisiertes Magnesiumsilikat der Zusammensetzung Mg₃[(OH)₂/Si₄O₁₀] oder 3 MgO-4 Si0₂ · H₂0 ist. Diese sogenannten Drei-Schicht-Phyllosilikate weisen einen triklinen, monoklinen oder rhombischen Kristallaufbau auf mit plättchenförmigem Erscheinungsbild. An weiteren Spurenelementen können Mn, Ti, Cr, Ni, Na und K anwesend sein, wobei die OH-Gruppe teilweise durch Fluorid ersetzt sein kann.

Besonders bevorzugt wird Talkum eingesetzt, dessen Teilchengrößen zu 99,5% < 20 µm beträgt. Die Teilchengrößenverteilung wird üblicherweise durch Sedimentationsanalyse bestimmt und beträgt vorzugsweise:

| | |
|---|---|
| < 20 µm | 99,5 Gew.-% |
| < 10 µm | 99 Gew.-% |
| < 5 µm | 85 Gew.-% |
| < 3 µm | 60 Gew.-% |
| < 2 µm | 43 Gew.-%. |

Derartige Produkte sind im Handel als Micro-Talc I. T. extra (Fa. Omya) erhältlich

Beispiele für Schlagzähmodifier als Komponente (C) sind Kautschuke, welche funktionelle Gruppen aufweisen können. Es können auch Mischungen aus zwei oder mehreren unterschiedlichen schlagzähmodifizierenden Kautschuken eingesetzt werden.

Kautschuke, die die Zähigkeit der Formmassen erhöhen, enthalten im Allgemeinen einen elastomeren Anteil, der eine Glasübergangstemperatur von weniger als -10°C, vorzugsweise von weniger als -30°C aufweist, und sie enthalten mindestens eine funktionelle Gruppe, die mit dem Polyamid reagieren kann. Geeignete funktionelle Gruppen sind beispielsweise Carbonsäure-, Carbonsäureanhydrid-, Carbonsäureester-, Carbonsäureamid-, Carbonsäureimid-, Amino-, Hydroxyl-, Epoxid-, Urethan- oder Oxazolingruppen, bevorzugt Carbonsäureanhydridgruppen.

Zu den bevorzugten funktionalisierten Kautschuken zählen funktionalisierte Polyolefinkautschuke, die aus folgenden Komponenten aufgebaut sind:
1. 40 bis 99 Gew.-% mindestens eines α-Olefins mit 2 bis 8 C-Atomen,
2. 0 bis 50 Gew.-% eines Diens,
3. 0 bis 45 Gew.-% eines C₁-C₁₂-Alkylesters der Acrylsäure oder Methacrylsäure oder Mischungen derartiger Ester,
4. 0 bis 40 Gew.-% einer ethylenisch ungesättigten C₂-C₂₀-Mono- oder Dicarbonsäure oder einem funktionellen Derivat einer solchen Säure,
5. 0 bis 40 Gew.-% eines Epoxygruppen enthaltenden Monomeren, und
6. 0 bis 5 Gew.-% sonstiger radikalisch polymerisierbarer Monomerer,
wobei die Summe der Komponenten 3) bis 5) mindestens 1 bis 45 Gew.-% beträgt, bezogen auf die Komponenten 1) bis 6).

Als Beispiele für geeignete α-Olefine können Ethylen, Propylen, 1-Butylen, 1-Pentylen, 1-Hexylen, 1-Heptylen, 1-Octylen, 2-Methylpropylen, 3-Methyl-1-butylen und 3-Ethyl-1-butylen genannt werden, wobei Ethylen und Propylen bevorzugt sind.

Als geeignete Dien-Monomere seien beispielsweise konjugierte Diene mit 4 bis 8 C-Atomen, wie Isopren und Butadien, nicht-konjugierte Diene mit 5 bis 25 C-Atomen, wie Penta-1,4-dien, Hexa-1,4-dien, Hexa-1,5-dien, 2,5-Dimethylhexa-1,5-dien und Octa-1,4-dien, cyclische Diene, wie Cyclopentadien, Cyclohexadiene, Cyclooctadiene und Dicyclopentadien, sowie Alkenyinorbomen, wie 5-Ethyliden-2-norbomen, 5-Butyliden-2-norbomen, 2-Methallyl-5-norbornen, 2-lsopropenyl-5-norbomen und Tricyclodiene, wie 3-Methyltricyclo-(5.2.1.0.2.6)-3,8-decadien, oder deren Mischungen genannt. Bevorzugt werden Hexa-1,5-dien, 5-Ethylidennorbomen und Dicyclopentadien.

Der Diengehalt beträgt vorzugsweise 0,5 bis 50, insbesondere 2 bis 20 und besonders bevorzugt 3 bis 15 Gew.-%, bezogen auf das Gesamtgewicht des Olefinpolymerisats. Beispiele für geeignete Ester sind Methyl-, Ethyl-, Propyl-, n-Butyl, i-Butyl- und 2-Ethylhexyl-, Octyl- und Decylacrylate bzw. die entsprechenden Ester der Methacrylsäure. Von diesen werden Methyl-, Ethyl-, Propyl-, n-Butyl- und 2-Ethylhexylacrylat bzw. -methacrylat besonders bevorzugt.

Anstelle der Ester oder zusätzlich zu diesen können in den Olefinpolymerisaten auch säurefunktionelle und/oder latent säurefunktionelle Monomere ethylenisch ungesättigter Mono- oder Dicarbonsäuren enthalten sein.

Beispiele für ethylenisch ungesättigte Mono- oder Dicarbonsäuren sind Acrylsäure, Methacrylsäure, tertiäre Alkylester dieser Säuren, insbesondere tert.-Butylacrylat und Dicarbonsäuren, wie Maleinsäure und Fumarsäure, oder Derivate dieser Säuren sowie deren Monoester.

Als latent säurefunktionelle Monomere sollen solche Verbindungen verstanden werden, die unter den Polymerisationsbedingungen bzw. bei der Einarbeitung der Olefinpolymerisate in die Formmassen freie Säuregruppen bilden. Als Beispiele hierfür seien Anhydride von Dicarbonsäuren mit 2 bis 20 C-Atomen, insbesondere Maleinsäureanhydrid und tertiäre C₁-C₁₂-Alkylester der vorstehend genannten Säuren, insbesondere tert.-Butylacrylat und tert.-Butylmethacrylat angeführt.

Als sonstige Monomere kommen z. B. Vinylester und Vinylether in Betracht.

Besonders bevorzugt sind Olefinpolymerisate aus 50 bis 98,9, insbesondere 60 bis 94,85 Gew.-% Ethylen, und 1 bis 50, insbesondere 5 bis 40 Gew.-% eines Esters der Acryl- oder Methacrylsäure 0,1 bis 20,0, insbesondere 0,15 bis 15 Gew.-% Glycidylacrylat und/oder Glycidylmethacrylat, Acrylsäure und/oder Maleinsäureanhydrid.

Besonders geeignete funktionalisierte Kautschuke sind Ethylen-Methylmethacrylat-Glycidylmethacrylat-, Ethylen-Methylacrylat-Glycidylmethacrylat-, Ethylen-Methylacrylat-Glycidylacrylat- und Ethylen-Me-thylmethacrylat-Glycidylacrylat-Polymere.

Die Herstellung der vorstehend beschriebenen Polymere kann nach an sich bekannten Verfahren erfolgen, vorzugsweise durch statistische Copolymerisation unter hohem Druck und erhöhter Temperatur.

Der Schmelzindex dieser Copolymere liegt im Allgemeinen im Bereich von 1 bis 80 g/10 min (gemessen bei 190°C und 2,16 kg Belastung).

Als weitere Gruppe von geeigneten Kautschuken sind Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glasübergangstemperatur von mindestens 25°C, unter einem weichen Bestandteil ein Polymerisat mit einer Glasübergangstemperatur von höchstens 0°C. Diese Produkte weisen eine Struktur aus einem Kern und mindestens einer Schale auf, wobei sich die Struktur durch die Reihenfolge der Monomerenzugabe ergibt. Die weichen Bestandteile leiten sich im Allgemeinen von Butadien, Isopren, Alkylacrylaten, Alkylmethacrylaten oderSiloxanen und gegebenenfalls weiteren Comonomeren ab. Geeignete Siloxankerne können beispielsweise ausgehend von cyclischem oligomerem Octamethyltetrasiloxao. oder etravinyltetramethyltetrasiloxan hergestellt werden. Diese können beispielsweise mit γ-Mercaptopropylmethyldimethoxysilan in einer ringöffnenden kationischen Polymerisation, vorzugsweise in Gegenwart von Sulfonsäuren, zu den weichen Siloxankernen umgesetzt werden. Die Siloxane können auch vernetzt werden, indem z. B. die Polymerisationsreaktion in Gegenwart von Silanen mit hydrolysierbaren Gruppen wie Halogen oder Alkoxygruppen wie Tetraethoxysilan, Methyltrimethoxysilan oder Phenyltrimethoxysilan durchgeführt wird. Als geeignete Comonomere sind hier z. B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich im Allgemeinen von Styrol, α-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Epoxi-, Oxazolin-, Urethan-, Hamstoff-, Lactam- oder Halogenbenzylgruppen, erfolgt hierbei vorzugsweise durch den Zusatz geeignet funktionalisierter Monomere bei der Polymerisation der letzten Schale. Geeignete funktionalisierte Monomere sind beispielsweise Maleinsäure, Maleinsäureanhydrid, Mono-oder Diester oder Maleinsäure, tertiär-Butyl-(meth)acrylat, Acrylsäure, Glycidyl(meth)acrylat und Vinyioxazolin. Der Anteil an Monomeren mit funktionellen Gruppen beträgt im Allgemeinen 0,1 bis 25 Gew.-%, vorzugsweise 0,25 bis 15 Gew.-%, bezogen auf das Gesamtgewicht des Kem-Schale-Pfropfkautschuks. Das Gewichtsverhältnis von weichen zu harten Bestandteilen beträgt im Allgemeinen 1:9 bis 9:1, bevorzugt 3:7 bis 8:2.

Derartige Kautschuke sind an sich bekannt und beispielsweise in der EP-A-0 208 187 beschrieben. Der Einbau von Oxazingruppen zur Funktionalisierung kann z. B. gemäß EP-A-0 791 606 erfolgen.

Eine weitere Gruppe von geeigneten Schlagzähmodifiern sind thermoplastische Polyester-Elastomere. Unter Polyester-Elastomeren werden dabei segmentierte Copolyetherester verstanden, die langkettige Segmente, die sich in der Regel von Poly(alkylen)etherglykolen und kurzkettige Segmente, die sich von niedermolekularen Diolen und Dicarbonsäuren ableiten, enthalten. Derartige Produkte sind an sich bekannt und in der Literatur, z. B. in der US 3,651,014, beschrieben. Auch im Handel sind entsprechende Produkte unter den Bezeichnungen Hytrel ^{™} (Du Pont), Arnitel ^{™} (Akzo) und Pelprene ^{™} (Toyobo Co. Ltd.) erhältlich.

Selbstverständlich können auch Mischungen verschiedener Kautschuke eingesetzt werden.

Als weitere Komponente (C) können die erfindungsgemäßen thermoplastischen Formmassen übliche Verarbeitungshilfsmittel wie Stabilisatoren, Oxidationsverzögerer, weitere Mittel gegen Wärmezersetzung und Zersetzung durch ultraviolettes Licht, Gleit-und Entformungsmittel, Färbemittel wie Farbstoffe und Pigmente, Keimbildungsmittel, Weichmacher, Flammschutzmittel usw. enthalten.

Als Beispiele für Oxidationsverzögerer und Wärmestabilisatoren seien Phosphite und weitere Amine (z. B. TAD), Hydrochinone, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im Allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß und/oder Graphit, weiterhin organische Pigmente, wie Phthalocyanine, Chinacridone, Perylene sowie Farbstoffe, wie Nigrosin und Anthrachinone als Farbmittel zugesetzt werden.

Als Keimbildungsmittel können Natriumphenylphosphinat, Aluminiumoxid, Siliziumdioxid sowie bevorzugt Talkum eingesetzt werden.

Die erfindungsgemäßen thermoplastischen Formmassen können nach an sich bekannten Verfahren hergestellt werden, in dem man die Ausgangskomponenten in üblichen Mischvorrichtungen wie Schneckenextrudern, Spinnextrudern, Knetern, Kalandern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 200 bis 300 °C, bevorzugt bei 230 bis 280 °C, besonders bevorzugt bei 250 bis 260 °C.

Nach einer weiteren bevorzugten Arbeitsweise können die Komponente(n) (B) sowie gegebenenfalls (C) mit einem Präpolymeren des Polyamids gemischt, konfektioniert und granuliert werden. Das erhaltene Granulat wird in fester Phase anschließend bevorzugt unter Inertgas kontinuierlich oder diskontinuierlich in die flammhemmend auszurüstende Komponente (A) eingearbeitet.

Die erfindungsgemäßen thermoplastischen Formmassen zeichnen sich durch gute Flammschutzeigenschaften sowie eine gute Verarbeitbarkeit/Fließfähigkeit sowie thermische Stabilität aus.

Diese eignen sich zur Herstellung von Fasern, Folien und Formkörpern jeglicher Art. Nachfolgend sind einige bevorzugte Beispiele genannt: Haushaltsartikel, Teppiche, Textilien, elektronisch Bauteile, medizinische Geräte, Kfz-Bauteile.

Die Erfindung wird anhand nachfolgender Beispiele näher verdeutlicht.

### Beispiele

Es wurden folgende Komponenten verwendet:
Komponente (A)
   Polyamid 6 mit einer Viskositätszahl VZ von 146 bis 151 ml/g, gemessen als 0,5 gew.-%ige Lösung in 96 gew.-%iger Schwefelsäure bei 25 °C nach ISO 307 (es wurde Ultramid B27 der BASF SE verwendet).
Komponente (B):
   Eine Phosphonatverbindung gemäß nachfolgender Formel, erhältlich unter dem Markennamen AFLAMMIT^{™} TL1260.

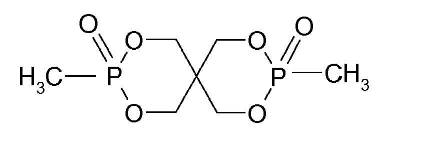

Die Komponenten (A) und (B) wurden in einem Einschneckenextruder bei 255 °C zu Granulat konfektioniert. Dieses Granulat wurde bei 255 °C Massetemperatur zu Probenkörpern extrudiert.

Es wurden folgende Prüfungen durchgeführt:
Brandtest in Anlehnung an UL94 an jeweils 0,8 mm bzw. 1,6 mm dicken Prüfkörpern mit einer Länge von 200 mm und einer Breite von 18 mm.

Die Zusammensetzungen der Prüfkörper sowie die Ergebnisse der Brandtestmessungen in Zweifachbestimmung sind der Tabelle zu entnehmen.

| Probenkörper | Komponente (B) | Brennzeit 1 (Sekunden) | Brennzeit 2 (Sekunden) | Gesamtnachbrennzeit | Einbrennlänge |
|---|---|---|---|---|---|
| | [Gew.-%] | | | (sec) x 5 | [mm] |
| Probenkörper 1 0,8 mm | 0 | 7 | 8 | 65 | 70 |
| Probenkörper 1 1,6 mm | 0 | 3 | 5 | 40 | 30 |
| Probenkörper 2 0,8 mm | 2 | 3 | 4 | 40 | 50 |
| Probenkörper 2 1,6 mm | 2 | 3 | 3 | 35 | 20 |
| Probenkörper 3 0,8 mm | 4 | 2 | 3 | 30 | 40 |
| Probenkörper 3 1,6 mm | 4 | 1 | 3 | 25 | 20 |
| Probenkörper 4 0,8 mm | 6 | 1 | 2 | 18 | 20 |
| Probenkörper 4 1,6 mm | 6 | 1 | 2 | 12 | 10 |
| Probenkörper 5 0,8 mm | 8 | 1 | 2 | 12 | 10 |
| Probenkörper 5 1,6 mm | 8 | 1 | 1 | 10 | 10 |

## Patentansprüche

1. Thermoplastische Polyamidformmassen enthaltend
(A) 10 bis 99 Gew.-% mindestens eines thermoplastischen Polyamids,
(B) 1 bis 40 Gew.-% eines Flammschutzmittels enthaltend eine oder mehrere Phosphonatverbindung(en) der Formel 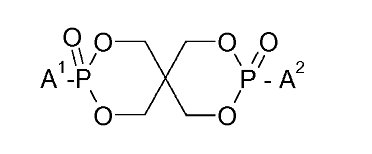 wobei A¹ und A² unabhängig voneinander eine substituierte oder nicht substituierte geradkettige oder verzweigte Alkylgruppe mit 1 bis 4 Kohlenstoffatomen, substituiertes oder nicht substituiertes Benzyl, substituiertes oder nicht substituiertes Phenyl, substituiertes oder nicht substituiertes Naphthyl darstellen, und
(C) 0 bis 70 Gew.-% weiterer Zusatzstoffe,
wobei die Summe der Gewichtsprozente der Komponenten (A) bis (C) 100 ergibt.

2. Thermoplastische Polyamidformmassen nach Anspruch 1, enthaltend als Phosphonatverbindung (B) eine Verbindung der nachfolgenden Formel

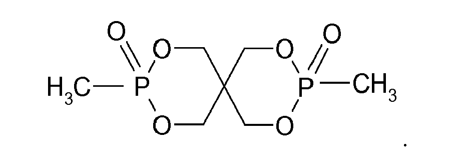

3. Thermoplastische Polyamidformmassen nach Anspruch 1 oder 2, enthaltend als weitere Zusatzstoffe (C) ein oder mehrere Verbindung(en) ausgewählt aus Pigmenten, Farbstoffen, Weichmachern, Antioxidantien, phenolischen Antioxidantien, UV-Absorptionsmittel sowie Gemischen davon.

4. Thermoplastische Polyamidformmassen nach einem der Ansprüche 1 bis 3, **dadurch gekennzeichnet, dass** sie Polyamid 66, Polyamid 6, Polyamid 612, Polyamid 11 und/oder Polyamid 12 enthalten.

5. Verwendung der thermoplastischen Polyamidformmassen gemäß den Ansprüchen 1 bis 4 zur Herstellung von Fasern, Folien und Formkörpern jeglicher Art.

6. Fasern, Folien und Formkörper erhältlich aus den thermoplastischen Formmassen gemäß den Ansprüchen 1 bis 4.

7. Verfahren zur Herstellung von thermoplastischen Formmassen gemäß einem der Ansprüche 1 bis 4, wobei das thermoplastische Polyamid mit dem Flammschutzmittel vermischt wird.

8. Verfahren nach Anspruch 7, wobei das thermoplastische Polyamid mit dem Flammschutzmittel in einem Extruder oder Kneter vermischt wird.

9. Verfahren nach Anspruch 7 oder 8, wobei das thermoplastische Polyamid bei einer Temperatur im Bereich von 200 bis 300 °C mit dem Flammschutzmittel vermischt wird.
